# EUROPEAN PATENT SPECIFICATION

(11) **EP 4 549 539 B1**
(45) Date of publication and mention of the grant of the patent: **06.05.2026**
(21) Application number: 24167826.7
(22) Date of filing: 29.03.2024
(51) Int. Cl.: C11C 3/00

(54) **CHEMICAL PRETREATMENT PROCESS FOR WASTE FAT, OIL AND GREASE**
VERFAHREN ZUR CHEMISCHEN VORBEHANDLUNG VON FETT, ÖL UND FETTABFÄLLEN
PROCÉDÉ DE PRÉTRAITEMENT CHIMIQUE POUR DÉCHETS GRAS, HUILE ET GRAISSE

(30) Priority: 31.10.2023 CN 202311432231
(43) Date of publication of application: 07.05.2025
(73) Proprietor: Fuzhou University, 350108 Fuzhou Fujian (CN)
(72) Inventor: Jiang, Lilong, Fuzhou, 350108 (CN); Huang, Kuan, Fuzhou, 350108 (CN); Cao, Yanning, Fuzhou, 350108 (CN); Ma, Yongde, Fuzhou, 350108 (CN); Cai, Zhenping, Fuzhou, 350108 (CN)
(74) Representative: Huang, Liwei

(56) References cited:
- EP-A1- 2 090 644
- WO-A1-2005/100519
- WO-A1-2008/100798
- WO-A1-2014/123711
- US-A1- 2005 204 612
- US-A1- 2008 312 468
- US-A1- 2009 247 785
- US-A1- 2020 270 545

## Description

### TECHNICAL FIELD

The present disclosure relates to the technical field of renewable energy, and in particular to a chemical pretreatment process for waste fat, oil and/or grease (FOG).

### BACKGROUND

The vigorous development of biodiesel production projects not only meets the need to develop clean energy in China, but also fits the current national goal of "peak carbon dioxide emissions and carbon neutrality". According to industry test data, every 1 ton of biodiesel used throughout the cycle can achieve 2.0 tons to 2.5 tons of carbon emission reductions. As certified by the Dutch Double Counting of the European Union that is the largest consumer of biomass energy in the world, compared with biodiesel produced from vegetable oils such as palm oil, soybean oil, and rapeseed oil as raw materials, biodiesel produced from waste FOG such as swill-cooked dirty oil, hogwash oil, and acidified oil as raw materials has higher carbon emission reduction properties and should be vigorously promoted and used. The waste FOG is a kind of by-product of the edible oil processing industry with wide and stable sources. Compared with animal fats and vegetable oils and microbial oils, the waste FOG is relatively cheap, and thus it has obvious cost advantages as raw materials for preparing second-generation biodiesel through hydrodeoxygenation.

However, the waste FOG has high fatty acid content and high acid value, and a hydrodeoxygenation reaction is carried out under high-temperature conditions and generates a large amount of water, which seriously affects the stability of the hydrogenation catalyst and causes the catalyst bed layer to be easily pulverized and deactivated. In addition, the waste FOG also contains a large number of impurities such as metals, phospholipids, and unsaponifiable substances. The deposition of such impurities on a surface of the hydrogenation catalyst also affects the stability of the hydrogenation catalyst. Therefore, when the waste FOG is used as raw materials to prepare second-generation biodiesel, the device needs to be frequently shut down to replace the catalyst, thus preventing stable run for a long period and resulting in high operating cost. In the existing technology for preparing the second-generation biodiesel by using the hydrodeoxygenation method, the waste FOG is generally pretreated by using conventional physical methods such as water method, acid washing, alkali washing, and adsorption, which can remove some impurities, but has a relatively low overall efficiency, and the conventional physical pretreatment methods cannot fundamentally address the problem of high acid value of the waste FOG.

Other methods for preparing biodiesel from waste oils are described in WO2014/123711 or US2005/204612.

### SUMMARY

In view of the deficiencies of the prior art, the present disclosure provides a chemical pretreatment process for waste FOG, which makes it possible to greatly reduce an acid value of the waste FOG, transform the waste FOG into a liquid with good fluidity, and significantly remove impurities such as metals, phospholipids, and unsaponifiable substances in the waste FOG. The waste FOG subjected to the chemical pretreatment process has a low loss rate (the yield is 98% or more). When such waste FOG is applied into a hydrodeoxygenation reaction section, it can greatly prolong the service life of the subsequent hydrogenation catalyst, significantly extend the operating time of the hydrodeoxygenation reaction section, immensely reduce catalyst consumption and operating costs, and improve device operation efficiency and production efficiency.

The invention is defined by the claims.

The present disclosure provides the following technical solutions.

The chemical pretreatment process for waste FOG includes three working sections: first, subjecting the waste FOG to esterification reaction to prepare a fatty acid methyl ester; second, subjecting a crude product obtained from the esterification reaction and a catalyst to liquid-liquid phase separation through a chromatograph device to obtain a crude product solution in a form of oil phase and a catalyst solution in a form of aqueous phase, respectively separating the aqueous phase and the oil phase through evaporation systems to obtain a crude product, catalyst and methanol and water, storing temporarily the crude product in a storage tank, and recycling the catalyst back to the reactor; and finally, refining the methanol aqueous solution through a distillation tower to obtain high-purity methanol, which is returned to the reactor for recycling, and introducing a resulting wastewater to a storage tank. Specifically, the chemical pretreatment process for waste FOG includes steps of:
S1, mixing a fresh methanol from a main pipeline from a boundary and a recycled ionic liquid from a catalyst recovery evaporation system to obtain a mixture, and then introducing the mixture into a catalyst preparation tank V101; adding a fresh ionic liquid catalyst to the catalyst preparation tank V101 and then stirring and dissolving to obtain a catalyst solution, and feeding out the catalyst solution through a catalyst conveying pump P101A/B; mixing a recycled methanol from a methanol recovery tower T101 with the waste FOG from the main pipeline from the boundary, followed by mixing with the catalyst solution, and then conveying to a static mixer X101 through a pipeline and conducting mixing fully to obtain a mixed system; introducing the mixed system into a 1# esterification reactor R101 and subjecting methanol and the waste FOG to esterification reaction under action of an ionic liquid catalyst at a preset reaction temperature and pressure to generate a fatty acid methyl ester and water; and introducing unreacted methanol, unreacted waste FOG and a crude product generated in the 1# esterification reactor R101 into a 2# esterification reactor R102 and continuing the esterification reaction to further generate the fatty acid methyl ester and water;
S2, introducing a crude product obtained after the esterification reaction in the 2# esterification reactor R102 to a filter F101A/B through a 2# external circulation pump P103A/B; removing a solid impurity precipitated in the filter F101A/B, and collecting the solid impurity into a solid-waste treatment and storage tank; introducing a filtered crude product into a chromatograph device V102 and conducting oil-water two-phase separation to obtain an oil phase and aqueous phase, where the oil phase mainly includes a fatty acid methyl ester, methanol, water, and some unreacted waste FOG, and the aqueous phase mainly includes methanol, an ionic liquid, and water generated by reactions;
S3, introducing the oil phase product obtained by the oil-water separation in the chromatograph device V102 into a crude product separation and evaporation system, and conducting flash evaporation to separate out methanol and a crude product by boiling point differences among water, methanol, and the fatty acid methyl ester; introducing a gas phase product obtained by the crude product separation and evaporation system, i.e., methanol and water into a subsequent methanol recovery system, and introducing the crude product containing the fatty acid methyl ester and partially unreacted waste FOG into a product storage tank through a crude product conveying pump P104A/B;
S4, introducing a product of the aqueous phase obtained by the oil-water separation in the chromatograph device V102 into the catalyst recovery evaporation system, and conducting flash evaporation to separate out the ionic liquid, methanol, and water by boiling point differences among the ionic liquid, methanol, and water; introducing a gas phase product obtained by the catalyst recovery evaporation system, i.e., methanol and water into the subsequent methanol recovery system, returning most of the recovered ionic liquid catalyst to the catalyst preparation tank V101, and introducing a deactivated ionic liquid into a waste catalyst recovery storage tank; and
S5, cooling the methanol and water from the crude product separation and evaporation system and the catalyst recovery evaporation system into a liquid through a methanol condenser E105, and introducing the liquid into a methanol storage tank V105; pressurizing the liquid by a methanol feed pump P105A/B, and then introducing the liquid into the methanol recovery tower T101 and conducting distillation separation to obtain high-purity gas phase methanol at a tower top and wastewater at a tower bottom; cooling the high-purity gas phase methanol by a tower top cooler E107 to obtain a methanol product, refluxing a part of the methanol product, and conveying back a part of the methanol product to the 1# reactor R101 by a reflux pump P107A/B; and conveying the wastewater obtained at the tower bottom to a waste liquid recovery storage tank through a waste liquid discharge pump P106A/B.

In some embodiments, the crude product separation and evaporation system in step S3 includes a 1# evaporator E103 and a 1# gas-liquid separator V103 disposed in series; and
the catalyst recovery evaporation system in step S4 includes a 2# evaporator E104 and a 2# gas-liquid separator V104 disposed in series.

In some embodiments, the ionic liquid catalyst in step S1 is a Bronsted acid protic ionic liquid prepared from a linear or heterocyclic tertiary amine compound and sulfuric acid, benzenesulfonic acid, or p-toluenesulfonic acid by one-step neutralization reaction between.

In some embodiments, in step S1, a mass ratio of reaction raw materials to the catalyst is in a range of waste FOG: methanol: catalyst of 1:(0.4 to 1.6):(0.05 to 0.50), the 1# esterification reactor R101 and the 2# esterification reactor R102 have an operating temperature of 60°C to 90°C, a reaction pressure of 0.1 MPa to 0.5 MPa, and a material residence time in both esterification reactors of 3 h to 5 h.

In some embodiments, the chromatograph device V102 in step S2 has an operating temperature of 40°C to 80°C, and an operating pressure of 0.1 MPa to 0.5 MPa.

In some embodiments, in step S3, the crude product separation and evaporation system has an operating temperature of 105°C to 165°C, an operating pressure of 0.1 MPa to 0.5 Mpa; a low-pressure steam of a heating medium in the 1# evaporator E103 has a temperature of 140°C to 180°C, and a pressure of 0.3 MPa to 0.8 Mpa; and a heated steam condensate is supplied to a previous esterification reaction section for providing heat; and
in step S4, the catalyst recovery evaporation system has an operating temperature of 100°C to 160°C, and an operating pressure of 0.1 MPa to 0.5 Mpa; a low-pressure steam of a heating medium in the 2 # evaporator E104 has a temperature of 140°C to 180°C, and a pressure of 0.3 MPa to 0.8 MPa; and a heated steam condensate is supplied to the previous esterification reaction section for providing heat.

In some embodiments, in step S5, the methanol recovery tower T101 has an operating pressure of 0.1 MPa to 0.5 MPa, an operating temperature at the tower top of 40°C to 80°C, an operating temperature at the tower bottom of 80°C to 120°C, and an operating reflux ratio of 1.0 to 5.0; a low-pressure steam of a heating medium at the tower bottom has a temperature of 100°C to 140°C, and a pressure of is 0.1 MPa to 0.3 MPa; and a heated steam condensate is supplied to the previous esterification reaction section for providing heat.

In some embodiments, the both esterification reactors in step S1 are stirred tank reactors internally provided with an inner coil heater and an external circulation heat exchanger E101/E102 for heating, and a heating medium is a steam condensate from a subsequent working section. When the reaction is out of control and overtemperature occurs, recycled water is added to reduce a temperature of the reaction through the external circulation heat exchanger E101/E102, and a reaction pressure is controlled by supplementing a low-pressure nitrogen.

In some embodiments, in order to prevent clogging from affecting normal operation, the filter connecting with the chromatograph device V102 in step S2 is provided with two filter devices disposed in parallel, namely a first filter F101A and a second filter F101B, one is put into normal use and the other is regularly back-flushed.

Some embodiments of the present disclosure have the following advantages.

The chemical pretreatment process according to the present disclosure makes it possible to greatly reduce the acid value of the waste FOG, transform the waste FOG into a liquid with good fluidity, and significantly remove impurities such as metals, phospholipids, and unsaponifiable substances in the waste FOG, thereby providing high-quality raw oil for producing second-generation biodiesel through a hydrodeoxygenation method. Specifically, by the chemical pretreatment process according to the present disclosure, the acid value of the waste FOG can be reduced to 10 mg KOH/g to 30 mg KOH/g, and removal rates of Fe, Ca, Na, P, and unsaponifiable substances reach 99% or more, 99% or more, 80% or more, 60% or more, and 50% or more, respectively, indicating that the impurity removal effect is very remarkable.

### BRIEF DESCRIPTION OF THE DRAWINGS

In order to illustrate the specific embodiments of the present disclosure more clearly, the drawings needed to be used in the specific embodiments will be briefly introduced below. Obviously, the drawings in the following description are some embodiments of the present disclosure. Other drawings can be obtained by those skilled in the art based on these drawings without creative effort.
FIG. 1 is a schematic diagram showing a process flow of a pretreatment reaction section according to one embodiment of the present disclosure; and
FIG. 2 is a schematic diagram showing a process flow of a catalyst recovery section according to one embodiment of the present disclosure.

### DETAILED DESCRIPTION OF THE EMBODIMENTS

The embodiments of the invention are described in the claims.

The technical solution of the present disclosure will be clearly and completely described below in conjunction with the drawings.

### Example 1:

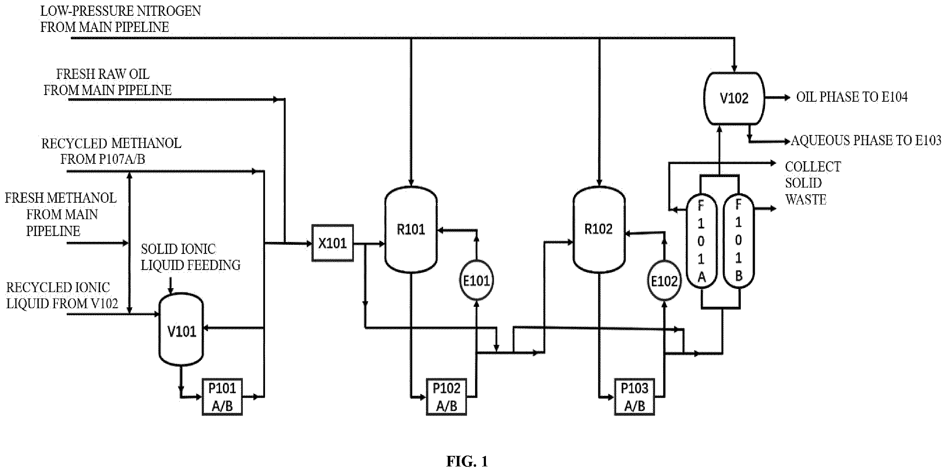

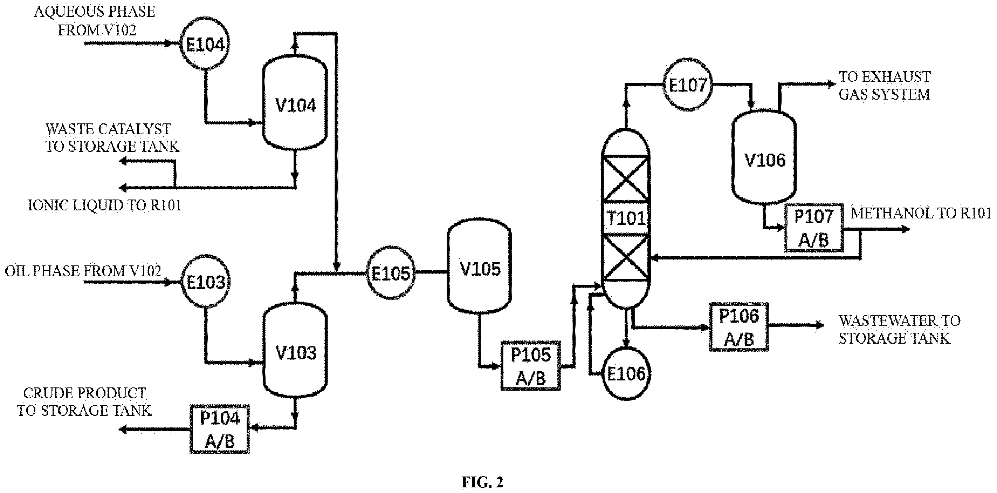

As shown in FIG. 1 and FIG. 2, a chemical pretreatment process for waste FOG according to the present disclosure was conducted as follows.

S1. Fresh methanol from a main pipeline from a boundary and a recycled ionic liquid from a catalyst recovery evaporation system (including a 2# evaporator E104 and a 2# gas-liquid separator V104 disposed in series) were mixed and then introduced into a catalyst preparation tank V101. A fresh ionic liquid catalyst was also added to the catalyst preparation tank V101, and then stirred and dissolved to obtain a catalyst solution. The catalyst solution was fed out through a catalyst conveying pump P101A/B. A recycled methanol from a methanol recovery tower T101 and waste FOG from the main pipeline from the boundary were mixed, and then mixed with the catalyst solution, such that a mass ratio of the waste FOG to methanol to the catalyst was waste FOG: methanol: catalyst = 1: 1.25:0.1 to obtain a mixed system. The mixed system was conveyed to a static mixer X101 through a pipeline and mixed fully therein and then introduced into a 1# esterification reactor R101, where a temperature of an inner coil heating fluid in the reactor was set to 80°C, and methanol and the waste FOG in the reactor was subjected to an esterification reaction under the action of the ionic liquid catalyst to generate a fatty acid methyl ester and water. Unreacted methanol, unreacted waste FOG, and a crude product generated in the 1# esterification reactor R101 were then introduced into a 2# esterification reactor R102 and continued to subject to esterification reaction to further generate the fatty acid methyl ester and water, where a temperature of an inner coil heating fluid in the 2# esterification reactor R102 was set to 80°C.

S2. The crude product obtained by the reaction in the 2# esterification reactor R102 was conveyed to a filter F101A/B through 2# external circulation pump P103A/B. Solid impurities precipitated in the filter F101A/B were removed and collected into a solid-waste treatment and storage tank, and the filtered crude product was introduced into a chromatograph device V102 and subjected to oil-water two-phase separation to obtain an oil phase and an aqueous phase. In order to improve the oil-water phase separation efficiency, an operating temperature of the chromatograph device V102 remained at 60°C. The separated oil phase mainly included fatty acid methyl ester, methanol, water, and some unreacted waste FOG, and the separated aqueous phase mainly included methanol, an ionic liquid, and water generated by reactions.

S3. The oil phase product obtained by the oil-water separation in the chromatograph device V102 was introduced into a crude product separation and evaporation system (including a 1# evaporator E103 and a 1# gas-liquid separator V103 disposed in series, in which a temperature of the 1# evaporator E103 was 140°C, and a low-pressure steam of 0.3 Mpa was used for heating), and subjected to flash evaporation to separate out methanol and a crude product by boiling point differences among water, methanol, and the fatty acid methyl ester. The gas phase products obtained by the crude product separation and evaporation system, i.e., methanol and water were introduced into a subsequent methanol recovery system, and the crude product containing fatty acid methyl ester and partially unreacted waste FOG was introduced into a product storage tank through a crude product conveying pump P104A/B.

S4. The aqueous phase product obtained by the oil-water separation in the chromatograph device V102 was introduced into the catalyst recovery evaporation system (including a 2# evaporator E104 and a 2# gas-liquid separator V104 disposed in series, in which a temperature of the 2# evaporator E104 was 150°C, and a low-pressure steam of 0.7 MPa was used for heating) and subjected to flash evaporation to separate out an ionic liquid, methanol, and water by boiling point differences among the ionic liquid, methanol, and water. The gas phase product obtained by the catalyst recovery evaporation system, i.e., methanol and water were introduced into the subsequent methanol recovery system, most of the recovered ionic liquid catalyst returned to the catalyst preparation tank V101, and a deactivated ionic liquid was introduced into a waste catalyst recovery storage tank.

S5. The methanol and water from the 1# gas-liquid separator V103 and the 2# gas-liquid separator V104 were cooled into a liquid through a methanol condenser E105, then introduced into a methanol storage tank V105, pressurized by a methanol feed pump P105A/B and introduced into the methanol recovery tower T101, and then subjected to distillation separation, where a temperature of a tower top was 55°C, a temperature of a tower bottom was 105°C, and a reflux ratio was 2.0. High-purity gas phase methanol obtained at the tower top was cooled by a tower top cooler E107, a part of a resulting product was refluxed, and a part of the resulting product was conveyed back to the 1# reactor R101 by a reflux pump P107A/B. Wastewater obtained at the tower bottom was conveyed to a waste liquid recovery storage tank through a waste liquid discharge pump P106A/B.

In order to clearly illustrate the actual effect of the present disclosure, the acid value and impurity content of raw oil, that is, the waste FOG before and after the chemical pretreatment were measured. The results are shown in the following table.

**Table 1. Impurity content of waste FOG before and after chemical pretreatment**

| Sample | Appearance | Acid value (mg/g) | Fe (ppm) | Ca (ppm) | Na (ppm) | P (ppm) | Unsaponifiable substance (%) |
|---|---|---|---|---|---|---|---|
| Before chemical pretreatment | Yellow solid | 145.55 | 259.92 | 74.70 | 10.44 | 22.07 | 2.98 |
| After chemical pretreatment | Brown liquid | 12.20 | 1.12 | 0.22 | 0.95 | 5.32 | 0.86 |

As seen from the above table, the chemical pretreatment process according to the present disclosure makes it possible to greatly reduce the acid value of the waste FOG, transform the waste FOG into a liquid with good fluidity, and significantly remove impurities such as metals, phospholipids, and unsaponifiable substances in the waste FOG, thereby providing high-quality raw oil for producing second-generation biodiesel through a hydrodeoxygenation method.

### Example 2:

As shown in FIG. 1 and FIG. 2, a chemical pretreatment process for waste FOG according to the present disclosure was conducted as follows.

S1. Fresh methanol from a main pipeline from a boundary and a recycled ionic liquid from a catalyst recovery evaporation system (including a 2# evaporator E104 and a 2# gas-liquid separator V104 disposed in series) were mixed and then introduced into a catalyst preparation tank V101. A fresh ionic liquid catalyst was also added to the catalyst preparation tank V101, and then stirred and dissolved to obtain a catalyst solution. The catalyst solution was fed out through a catalyst conveying pump P101A/B. A recycled methanol from a methanol recovery tower T101 and waste FOG from the main pipeline from the boundary were mixed and then mixed with the catalyst solution, such that a mass ratio of the waste FOG to methanol to the catalyst was waste FOG: methanol: catalyst = 1: 1.25:0.1 to obtain a mixed system. The mixed system was conveyed to a static mixer X101 through a pipeline and mixed fully therein and then introduced into a 1# esterification reactor R101, where a temperature of an inner coil heating fluid in the reactor was set to 60°C, and methanol and the waste FOG in the reactor was subjected to an esterification reaction under the action of the ionic liquid catalyst to generate a fatty acid methyl ester and water. Unreacted methanol, unreacted waste FOG, and a crude product generated in the 1# esterification reactor R101 were then introduced into a 2# esterification reactor R102 and continued to subject to esterification reaction to further generate the fatty acid methyl ester and water, where a temperature of an inner coil heating fluid in the 2# esterification reactor R102 was set to 80°C.

S2. The crude product obtained by the reaction in the 2# esterification reactor R102 was conveyed to a filter F101A/B through 2# external circulation pump P103A/B. Solid impurities precipitated in the filter F101A/B were removed and collected into a solid-waste treatment and storage tank, and the filtered crude product was introduced into a chromatograph device V102 and subjected to oil-water two-phase separation to obtain an oil phase and an aqueous phase. In order to improve the oil-water phase separation efficiency, an operating temperature of the chromatograph device V102 remained at 60°C. The separated oil phase mainly included a fatty acid methyl ester, methanol, water, and some unreacted waste FOG, and the separated aqueous phase mainly included methanol, an ionic liquid, and water generated by reactions.

S3. The oil phase product obtained by the oil-water separation in the chromatograph device V102 was introduced into a crude product separation and evaporation system (including a 1# evaporator E103 and a 1# gas-liquid separator V103 disposed in series, in which a temperature of the 1# evaporator E103 was 140°C, and a low-pressure steam of 0.6 Mpa was used for heating), and subjected to flash evaporation to separate out methanol and a crude product by boiling point differences among water, methanol, and the fatty acid methyl ester. The gas phase products obtained by the crude product separation and evaporation system, i.e., methanol and water were introduced into a subsequent methanol recovery system, and the crude product containing the fatty acid methyl ester and partially unreacted waste FOG was introduced into a product storage tank through a crude product conveying pump P104A/B.

S4. The aqueous phase product obtained by the oil-water separation in the chromatograph device V102 was introduced into the catalyst recovery evaporation system (including a 2# evaporator E104 and a 2# gas-liquid separator V104 disposed in series, in which a temperature of the 2# evaporator E104 was 150°C, and a low-pressure steam of 0.3 MPa was used for heating) and subjected to flash evaporation to separate out an ionic liquid, methanol, and water by boiling point differences among the ionic liquid, methanol, and water. The gas phase product obtained by the catalyst recovery evaporation system, i.e., methanol and water were introduced into the subsequent methanol recovery system, most of the recovered ionic liquid catalyst returned to the catalyst preparation tank V101, and a deactivated ionic liquid was introduced into a waste catalyst recovery storage tank.

S5. The methanol and water from the 1# gas-liquid separator V103 and the 2# gas-liquid separator V104 were cooled into a liquid through a methanol condenser E105, then introduced into a methanol storage tank V105, pressurized by a methanol feed pump P105A/B, and introduced into the methanol recovery tower T101, and then subjected to distillation separation, where a temperature of a tower top was 75°C, a temperature of a tower bottom was 115°C, and a reflux ratio was 3.0. High-purity gas phase methanol obtained at the tower top was cooled by a tower top cooler E107, a part of a resulting product was refluxed, and a part of the resulting product was conveyed back to the 1# reactor R101 by a reflux pump P107A/B. Wastewater obtained at the tower bottom was conveyed to a waste liquid recovery storage tank through a waste liquid discharge pump P106A/B.

### Example 3:

As shown in FIG. 1 and FIG. 2, a chemical pretreatment process for waste FOG according to the present disclosure was conducted as follows.

S1. Fresh methanol from a main pipeline from a boundary and a recycled ionic liquid from a catalyst recovery evaporation system (including a 2# evaporator E104 and a 2# gas-liquid separator V104 disposed in series) were mixed and then introduced into a catalyst preparation tank V101. A fresh ionic liquid catalyst was also added to the catalyst preparation tank V101, and then stirred and dissolved to obtain a catalyst solution. The catalyst solution was fed out through a catalyst conveying pump P101A/B. A recycled methanol from a methanol recovery tower T101 and waste FOG from the main pipeline from the boundary were mixed, and then mixed with the catalyst solution such that a mass ratio of the waste FOG to methanol to the catalyst was waste FOG: methanol: catalyst = 1:0.75:0.3 to obtain a mixed system. The mixed system was conveyed to a static mixer X101 through a pipeline and mixed fully therein and then introduced into a 1# esterification reactor R101, where a temperature of an inner coil heating fluid in the reactor was set to 80°C, and methanol and the waste FOG in the reactor was subjected to an esterification reaction under the action of the ionic liquid catalyst to generate a fatty acid methyl ester and water. Unreacted methanol, unreacted waste FOG, and a crude product generated in the 1# esterification reactor R101 were then introduced into a 2# esterification reactor R102 and continued to subject to esterification reaction to further generate the fatty acid methyl ester and water, where a temperature of an inner coil heating fluid in the 2# esterification reactor R102 was set to 80°C.

S2. The crude product obtained by the reaction in the 2# esterification reactor R102 was conveyed to a filter F101A/B through 2# external circulation pump P103A/B. Solid impurities precipitated in the filter F101A/B were removed and collected into a solid-waste treatment and storage tank, and the filtered crude product was introduced into a chromatograph device V102 and subjected to oil-water two-phase separation to obtain an oil phase and an aqueous phase. In order to improve the oil-water phase separation efficiency, an operating temperature of the chromatograph device V102 remained at 70°C. The separated oil phase mainly included a fatty acid methyl ester, methanol, water, and some unreacted waste FOG, and the separated aqueous phase mainly included methanol, an ionic liquid, and water generated by reactions.

S3. The oil phase product obtained by the oil-water separation in the chromatograph device V102 was introduced into a crude product separation and evaporation system (including a 1# evaporator E103 and a 1# gas-liquid separator V103 disposed in series, in which a temperature of the 1# evaporator E103 was 180°C, and a low-pressure steam of 0.3 Mpa was used for heating), and subjected to flash evaporation to separate out methanol and a crude product by boiling point differences among water, methanol, and the fatty acid methyl ester. The gas phase products obtained by the crude product separation and evaporation system, i.e., methanol and water were introduced into a subsequent methanol recovery system, and the crude product containing a fatty acid methyl ester and partially unreacted waste FOG was introduced into a product storage tank through a crude product conveying pump P104A/B.

S4. The aqueous phase product obtained by the oil-water separation in the chromatograph device V102 was introduced into the catalyst recovery evaporation system (including a 2# evaporator E104 and a 2# gas-liquid separator V104 disposed in series, in which a temperature of the 2# evaporator E104 was 140°C, and a low-pressure steam of 0.8 MPa was used for heating) and subjected to flash evaporation to separate out an ionic liquid, methanol, and water by boiling point differences among the ionic liquid, methanol, and water. The gas phase product obtained by the catalyst recovery evaporation system, i.e., methanol and water were introduced into the subsequent methanol recovery system, most of the recovered ionic liquid catalyst returned to the catalyst preparation tank V101, and a deactivated ionic liquid was introduced into a waste catalyst recovery storage tank.

S5. The methanol and water from the 1# gas-liquid separator V103 and the 2# gas-liquid separator V104 were cooled into a liquid through a methanol condenser E105, then introduced into a methanol storage tank V105, pressurized by a methanol feed pump P105A/B and introduced into the methanol recovery tower T101, and then subjected to distillation separation, where a temperature of a tower top was 80°C, a temperature of a tower bottom was 120°C, and a reflux ratio was 4.0. High-purity gas phase methanol obtained at the tower top was cooled by a tower top cooler E107, a part of a resulting product was refluxed, and a part of the resulting product was conveyed back to the 1# reactor R101 by a reflux pump P107A/B. Wastewater obtained at the tower bottom was conveyed to a waste liquid recovery storage tank through a waste liquid discharge pump P106A/B.

### Example 4:

As shown in FIG. 1 and FIG. 2, a chemical pretreatment process for waste FOG according to the present disclosure was conducted as follows.

S1. Fresh methanol from a main pipeline from a boundary and a recycled ionic liquid from a catalyst recovery evaporation system (including a 2# evaporator E104 and a 2# gas-liquid separator V104 disposed in series) were mixed and then introduced into a catalyst preparation tank V101. A fresh ionic liquid catalyst was also added to the catalyst preparation tank V101, and then stirred and dissolved to obtain a catalyst solution. The catalyst solution was fed out through a catalyst conveying pump P101A/B. A recycled methanol from a methanol recovery tower T101 and waste FOG from the main pipeline from the boundary were mixed, and then mixed with the catalyst solution such that a mass ratio of the waste FOG to methanol to the catalyst was waste FOG: methanol: catalyst = 1: 1.6:0.05 to obtain a mixed system. The mixed system was conveyed to a static mixer X101 through a pipeline and mixed fully therein and then introduced into a 1# esterification reactor R101, where a temperature of an inner coil heating fluid in the reactor was set to 70°C, and methanol and the waste FOG in the reactor was subjected to an esterification reaction under the action of the ionic liquid catalyst to generate a fatty acid methyl ester and water. Unreacted methanol, unreacted waste FOG, and a crude product generated in the 1# esterification reactor R101 were then introduced into a 2# esterification reactor R102 and continued to subject to esterification reaction to further generate the fatty acid methyl ester and water, where a temperature of an inner coil heating fluid in the 2# esterification reactor R102 was set to 90°C.

S2. The crude product obtained by the reaction in the 2# esterification reactor R102 was conveyed to a filter F101A/B through 2# external circulation pump P103A/B. Solid impurities precipitated in the filter F101A/B were removed and collected into a solid-waste treatment and storage tank, and the filtered crude product was introduced into a chromatograph device V102 and subjected to oil-water two-phase separation to obtain an oil phase and an aqueous phase. In order to improve the oil-water phase separation efficiency, an operating temperature of the chromatograph device V102 remained at 80°C. The separated oil phase mainly included a fatty acid methyl ester, methanol, water, and some unreacted waste FOG, and the separated aqueous phase mainly included methanol, an ionic liquid, and water generated by reactions.

S3. The oil phase product obtained by the oil-water separation in the chromatograph device V102 was introduced into a crude product separation and evaporation system (including a 1# evaporator E103 and a 1# gas-liquid separator V103 disposed in series, in which a temperature of the 1# evaporator E103 was 160°C, and a low-pressure steam of 0.6 Mpa was used for heating) and subjected to flash evaporation to separate out methanol and a crude product by boiling point differences among water, methanol, and the fatty acid methyl ester. The gas phase products obtained by the crude product separation and evaporation system, i.e., methanol and water were introduced into a subsequent methanol recovery system, and the crude product containing the fatty acid methyl ester and partially unreacted waste FOG was introduced into a product storage tank through a crude product conveying pump P104A/B.

S4. The aqueous phase product obtained by the oil-water separation in the chromatograph device V102 was introduced into the catalyst recovery evaporation system (including a 2# evaporator E104 and a 2# gas-liquid separator V104 disposed in series, in which a temperature of the 2# evaporator E104 was 180°C, and a low-pressure steam of 0.3 MPa was used for heating) and subjected to flash evaporation to separate out an ionic liquid, methanol, and water by boiling point differences among the ionic liquid, methanol, and water. The gas phase product obtained by the catalyst recovery evaporation system, i.e., methanol and water introduced into the subsequent methanol recovery system, most of the recovered ionic liquid catalyst returned to the catalyst preparation tank V101, and a deactivated ionic liquid was introduced into a waste catalyst recovery storage tank.

S5. The methanol and water from the 1# gas-liquid separator V103 and the 2# gas-liquid separator V104 were cooled into a liquid through a methanol condenser E105, then introduced into a methanol storage tank V105, pressurized by a methanol feed pump P105A/B and introduced into the methanol recovery tower T101, and then subjected to distillation separation, where a temperature of a tower top was 55°C, a temperature of a tower bottom was 105°C, and a reflux ratio was 5.0. High-purity gas phase methanol obtained at the tower top was cooled by a tower top cooler E107, a part of a resulting product was refluxed, and a part of the resulting product was conveyed back to the 1# reactor R101 by a reflux pump P107A/B. Wastewater obtained at the tower bottom was conveyed to a waste liquid recovery storage tank through a waste liquid discharge pump P106A/B.

### Example 5:

As shown in FIG. 1 and FIG. 2, a chemical pretreatment process for waste FOG according to the present disclosure was conducted as follows.

S1. Fresh methanol from a main pipeline from a boundary and a recycled ionic liquid from a catalyst recovery evaporation system (including a 2# evaporator E104 and a 2# gas-liquid separator V104 disposed in series) were mixed and then introduced into a catalyst preparation tank V101. A fresh ionic liquid catalyst was also added to the catalyst preparation tank V101, and then stirred and dissolved to obtain a catalyst solution. The catalyst solution was fed out through a catalyst conveying pump P101A/B. A recycled methanol from a methanol recovery tower T101 and waste FOG from the main pipeline from the boundary were mixed, and then mixed with the catalyst solution such that a mass ratio of the waste FOG to methanol to the catalyst was waste FOG: methanol: catalyst = 1:0.4:0.5 to obtain a mixed system. The mixed system was conveyed to a static mixer X101 through a pipeline and mixed fully therein and then introduced into a 1# esterification reactor R101, where a temperature of an inner coil heating fluid in the reactor was set to 60°C, and methanol and the waste FOG in the reactor was subjected to an esterification reaction under the action of the ionic liquid catalyst to generate a fatty acid methyl ester and water. Unreacted methanol, unreacted waste FOG, and a crude product generated in the 1# esterification reactor R101 were then introduced into a 2# esterification reactor R102 and continued to subject to esterification reaction to further generate the fatty acid methyl ester and water, where a temperature of an inner coil heating fluid in the 2# esterification reactor R102 was set to 90°C.

S2. The crude product obtained by the reaction in the 2# esterification reactor R102 was conveyed to a filter F101A/B through 2# external circulation pump P103A/B. Solid impurities precipitated in the filter F101A/B were removed and collected into a solid-waste treatment and storage tank, and the filtered crude product was introduced into a chromatograph device V102 and subjected to oil-water two-phase separation to obtain an oil phase and an aqueous phase. In order to improve the oil-water phase separation efficiency, an operating temperature of the chromatograph device V102 remained at 50°C. The separated oil phase mainly included the fatty acid methyl ester, methanol, water, and some unreacted waste FOG, and the separated aqueous phase mainly included methanol, an ionic liquid, and water generated by reactions.

S3. The oil phase product obtained by the oil-water separation in the chromatograph device V102 was introduced into a crude product separation and evaporation system (including a 1# evaporator E103 and a 1# gas-liquid separator V103 disposed in series, in which a temperature of the 1# evaporator E103 was 140°C, and a low-pressure steam of 0.8 Mpa was used for heating), and subjected to flash evaporation to separate out methanol and a crude product by boiling point differences among water, methanol, and the fatty acid methyl ester. The gas phase products obtained by the crude product separation and evaporation system, i.e., methanol and water were introduced into a subsequent methanol recovery system, and the crude product containing the fatty acid methyl ester and partially unreacted waste FOG was introduced into a product storage tank through a crude product conveying pump P104A/B.

S4. The aqueous phase product obtained by the oil-water separation in the chromatograph device V102 was introduced into the catalyst recovery evaporation system (including a 2# evaporator E104 and a 2# gas-liquid separator V104 disposed in series, in which a temperature of the 2# evaporator E104 was 150°C, and a low-pressure steam of 0.5 MPa was used for heating) and subjected to flash evaporation to separate out an ionic liquid, methanol, and water by boiling point differences among the ionic liquid, methanol, and water. The gas phase product obtained by the catalyst recovery evaporation system, i.e., methanol and water were introduced into the subsequent methanol recovery system, most of the recovered ionic liquid catalyst returned to the catalyst preparation tank V101, and a deactivated ionic liquid was introduced into a waste catalyst recovery storage tank.

S5. The methanol and water from the 1# gas-liquid separator V103 and the 2# gas-liquid separator V104 were cooled into a liquid through a methanol condenser E105, then introduced into a methanol storage tank V105, pressurized by a methanol feed pump P105A/B and introduced into the methanol recovery tower T101, and then subjected to distillation separation, where a temperature of a tower top was 60°C, a temperature of a tower bottom was 120°C, and a reflux ratio was 1.0. High-purity gas phase methanol obtained at the tower top was cooled by a tower top cooler E107, a part of a resulting product was refluxed, and a part of the resulting product was conveyed back to the 1# reactor R101 by a reflux pump P107A/B. Wastewater obtained at the tower bottom was conveyed to a waste liquid recovery storage tank through a waste liquid discharge pump P106A/B.

### Example 6:

As shown in FIG. 1 and FIG. 2, a chemical pretreatment process for waste FOG according to the present disclosure was conducted as follows.

S1. Fresh methanol from a main pipeline from a boundary and a recycled ionic liquid from a catalyst recovery evaporation system (including a 2# evaporator E104 and a 2# gas-liquid separator V104 disposed in series) were mixed and then introduced into a catalyst preparation tank V101. A fresh ionic liquid catalyst was also added to the catalyst preparation tank V101, and then stirred and dissolved to obtain a catalyst solution. The catalyst solution was fed out through a catalyst conveying pump P101A/B. A recycled methanol from a methanol recovery tower T101 and waste FOG from the main pipeline from the boundary were mixed, and then mixed with the catalyst solution, such that a mass ratio of the waste FOG to methanol to the catalyst was waste FOG: methanol: catalyst = 1:0.8:0.05 to obtain a mixed system. The mixed system was conveyed to a static mixer X101 through a pipeline and mixed fully therein and then introduced into a 1# esterification reactor R101, where a temperature of an inner coil heating fluid in the reactor was set to 90°C, and methanol and the waste FOG in the reactor was subjected to an esterification reaction under the action of the ionic liquid catalyst to generate a fatty acid methyl ester and water. Unreacted methanol, unreacted waste FOG, and a crude product generated in the 1# esterification reactor R101 were then introduced into a 2# esterification reactor R102 and continued to subject to esterification reaction to further generate the fatty acid methyl ester and water, where a temperature of an inner coil heating fluid in the 2# esterification reactor R102 was set to 80°C.

S2. The crude product obtained by the reaction in the 2# esterification reactor R102 was conveyed to a filter F101A/B through 2# external circulation pump P103A/B. Solid impurities precipitated in the filter F101A/B were removed and collected into a solid-waste treatment and storage tank, and the filtered crude product was introduced into a chromatograph device V102 and subjected to oil-water two-phase separation to obtain an oil phase and an aqueous phase. In order to improve the oil-water phase separation efficiency, an operating temperature of the chromatograph device V102 remained at 40°C. The separated oil phase mainly included the fatty acid methyl ester, methanol, water, and some unreacted waste FOG, and the separated aqueous phase mainly included methanol, an ionic liquid, and water generated by the reaction.

S3. The oil phase product obtained by the oil-water separation in the chromatograph device V102 was introduced into a crude product separation and evaporation system (including a 1# evaporator E103 and a 1# gas-liquid separator V103 disposed in series, in which a temperature of the 1# evaporator E103 was 180°C, and a low-pressure steam of 0.3 Mpa was used for heating), and subjected to flash evaporation to separate out methanol and a crude product by boiling point differences among water, methanol, and the fatty acid methyl ester. The gas phase products obtained by the crude product separation and evaporation system, i.e., methanol and water were introduced into a subsequent methanol recovery system, and the crude product containing a fatty acid methyl ester and partially unreacted waste FOG was introduced into a product storage tank through a crude product conveying pump P104A/B.

S4. The aqueous phase product obtained by the oil-water separation in the chromatograph device V102 was introduced into the catalyst recovery evaporation system (including a 2# evaporator E104 and a 2# gas-liquid separator V104 disposed in series, in which a temperature of the 2# evaporator E104 was 140°C, and a low-pressure steam of 0.8 MPa was used for heating) and subjected to flash evaporation to separate out an ionic liquid, methanol, and water by boiling point differences among the ionic liquid, methanol, and water. The gas phase products obtained by the catalyst recovery evaporation system, i.e., methanol and water were introduced into the subsequent methanol recovery system, most of the recovered ionic liquid catalyst returned to the catalyst preparation tank V101, and a deactivated ionic liquid was introduced into a waste catalyst recovery storage tank.

S5. The methanol and water from the 1# gas-liquid separator V103 and the 2# gas-liquid separator V104 were cooled into a liquid through a methanol condenser E105, then introduced into a methanol storage tank V105, pressurized by a methanol feed pump P105A/B and introduced into the methanol recovery tower T101, and then subjected to distillation separation, where a temperature of a tower top was 80°C, a temperature of a tower bottom was 80°C, and a reflux ratio was 2.0. High-purity gas phase methanol obtained at the tower top was cooled by a tower top cooler E107, a part of a resulting product was refluxed, and a part of the resulting product was conveyed back to the 1# reactor R101 by a reflux pump P107A/B. Wastewater obtained at the tower bottom was conveyed to a waste liquid recovery storage tank through a waste liquid discharge pump P106A/B.

### Example 7:

As shown in FIG. 1 and FIG. 2, a chemical pretreatment process for waste FOG according to the present disclosure was conducted as follows.

S1. Fresh methanol from a main pipeline from a boundary and a recycled ionic liquid from a catalyst recovery evaporation system (including a 2# evaporator E104 and a 2# gas-liquid separator V104 disposed in series) were mixed and then introduced into a catalyst preparation tank V101. A fresh ionic liquid catalyst was also added to the catalyst preparation tank V101, and then stirred and dissolved to obtain a catalyst solution. The catalyst solution was fed out through a catalyst conveying pump P101A/B. A recycled methanol from a methanol recovery tower T101 and waste FOG from the main pipeline from the boundary were mixed, and then mixed with the catalyst solution, such that a mass ratio of the waste FOG to methanol to the catalyst was waste FOG: methanol: catalyst = 1: 1.25:0.1 to obtain a mixed system. The mixed system was conveyed to a static mixer X101 through a pipeline and mixed fully therein and then introduced into a 1# esterification reactor R101, where a temperature of an inner coil heating fluid in the reactor was set to 70°C, and methanol and the waste FOG in the reactor was subjected to an esterification reaction under the action of the ionic liquid catalyst to generate a fatty acid methyl ester and water. Unreacted methanol, unreacted waste FOG, and a crude product generated in the 1# esterification reactor R101 were then introduced into a 2# esterification reactor R102 and continued to subject to esterification reaction to further generate the fatty acid methyl ester and water, where a temperature of an inner coil heating fluid in the 2# esterification reactor R102 was set to 90°C.

S2. The crude product obtained by the reaction in the 2# esterification reactor R102 was conveyed to a filter F101A/B through 2# external circulation pump P103A/B. Solid impurities precipitated in the filter F101A/B were removed and collected into a solid-waste treatment and storage tank, and the filtered crude product was introduced into a chromatograph device V102 and subjected to oil-water two-phase separation to obtain an oil phase and an aqueous phase. In order to improve the oil-water phase separation efficiency, an operating temperature of the chromatograph device V102 remained at 60°C. The separated oil phase mainly included the fatty acid methyl ester, methanol, water, and some unreacted waste FOG, and the separated aqueous phase mainly included methanol, an ionic liquid, and water generated by reactions.

S3. The oil phase product obtained by the oil-water separation in the chromatograph device V102 was introduced into a crude product separation and evaporation system (including a 1# evaporator E103 and a 1# gas-liquid separator V103 disposed in series, in which a temperature of the 1# evaporator E103 was 150°C, and a low-pressure steam of 0.7 Mpa was used for heating) and subjected to flash evaporation to separate out methanol and a crude product by boiling point differences among water, methanol, and the fatty acid methyl ester. The gas phase products obtained by the crude product separation and evaporation system, i.e., methanol and water were introduced into a subsequent methanol recovery system, and the crude product containing the fatty acid methyl ester and partially unreacted waste FOG was introduced into a product storage tank through a crude product conveying pump P104A/B.

S4. The aqueous phase product obtained by the oil-water separation in the chromatograph device V102 was introduced into the catalyst recovery evaporation system (including a 2# evaporator E104 and a 2# gas-liquid separator V104 disposed in series, in which a temperature of the 2# evaporator E104 was 180°C, and a low-pressure steam of 0.8 MPa was used for heating) and subjected to flash evaporation to separate out an ionic liquid, methanol, and water by boiling point differences among the ionic liquid, methanol, and water. The gas phase products obtained by the catalyst recovery evaporation system, i.e., methanol and water were introduced into the subsequent methanol recovery system, most of the recovered ionic liquid catalyst returned to the catalyst preparation tank V101, and a deactivated ionic liquid was introduced into a waste catalyst recovery storage tank.

S5. The methanol and water from the 1# gas-liquid separator V103 and the 2# gas-liquid separator V104 were cooled into a liquid through a methanol condenser E105, then introduced into a methanol storage tank V105, pressurized by a methanol feed pump P105A/B and introduced into the methanol recovery tower T101, and then subjected to distillation separation, where a temperature of a tower top was 40°C, a temperature of a tower bottom was 120°C, and a reflux ratio was 1.0. High-purity gas phase methanol obtained at the tower top was cooled by a tower top cooler E107, a part of a resulting product was refluxed, and a part of the resulting product was conveyed back to the 1# reactor R101 by a reflux pump P107A/B. Wastewater obtained at the tower bottom was conveyed to a waste liquid recovery storage tank through a waste liquid discharge pump P106A/B.

## Claims

1. A chemical pretreatment process for waste fat, oil and/or grease (FOG) comprising:
S1, mixing a fresh methanol from a main pipeline from a boundary and a recycled ionic liquid from a catalyst recovery evaporation system to obtain a mixture, and then introducing the mixture into a catalyst preparation tank (V101); adding a fresh ionic liquid catalyst to the catalyst preparation tank (V101) and then stirring and dissolving to obtain a catalyst solution, and feeding out the catalyst solution through a catalyst conveying pump (P101A/B); mixing a recycled methanol from a methanol recovery tower (T101) with the waste FOG from the main pipeline from the boundary, followed by mixing with the catalyst solution, and then conveying to a static mixer (X101) through a pipeline and conducting mixing fully to obtain a mixed system; introducing the mixed system into a 1# esterification reactor (R101) and subjecting methanol and the waste FOG to esterification reaction under action of an ionic liquid catalyst at a preset reaction temperature and pressure to generate a fatty acid methyl ester and water; and introducing unreacted methanol, unreacted waste FOG and a crude product generated in the 1# esterification reactor (R101) into a 2# esterification reactor (R102) and continuing the esterification reaction to further generate the fatty acid methyl ester and water;
S2, introducing a crude product obtained after the esterification reaction in the 2# esterification reactor (R102) to a filter (F101A/B) through a 2# external circulation pump (P103A/B); removing a solid impurity precipitated in the filter (F101A/B), and collecting the solid impurity into a solid-waste treatment and storage tank; introducing a filtered crude product into a chromatograph device (V102) and conducting oil-water two-phase separation to obtain an oil phase and an aqueous phase, wherein the oil phase mainly comprises a fatty acid methyl ester, methanol, water, and some unreacted waste FOG, and the aqueous phase mainly comprises methanol, an ionic liquid, and water generated by reactions;
S3, introducing the oil phase product obtained by the oil-water separation in the chromatograph device (V102) into a crude product separation and evaporation system, and conducting flash evaporation to separate out methanol and a crude product by boiling point differences among water, methanol, and the fatty acid methyl ester; introducing a gas phase product obtained by the crude product separation and evaporation system, i.e., methanol and water into a subsequent methanol recovery system, and introducing the crude product containing the fatty acid methyl ester and partially unreacted waste FOG into a product storage tank through a crude product conveying pump (P104A/B);
S4, introducing the aqueous phase product obtained by the oil-water separation in the chromatograph device (V102) into the catalyst recovery evaporation system, and conducting flash evaporation to separate out the ionic liquid, methanol, and water by boiling point differences among the ionic liquid, methanol, and water; introducing a gas phase product obtained by the catalyst recovery evaporation system, i.e., methanol and water into the subsequent methanol recovery system, returning most of the recovered ionic liquid catalyst to the catalyst preparation tank (V101), and introducing a deactivated ionic liquid into a waste catalyst recovery storage tank; and
S5, cooling the methanol and water from the crude product separation and evaporation system and the catalyst recovery evaporation system into a liquid through a methanol condenser (E105), and introducing the liquid into a methanol storage tank (V105); pressurizing the liquid by a methanol feed pump (P105A/B), and then introducing the liquid into the methanol recovery tower (T101) and conducting distillation separation to obtain high-purity gas phase methanol at a tower top and wastewater at a tower bottom; cooling the high-purity gas phase methanol by a tower top cooler (E107) to obtain a methanol product, refluxing a part of the methanol product and conveying back a part of the methanol product to the 1# reactor (R101) by a reflux pump (P107A/B); and conveying the wastewater obtained at the tower bottom to a waste liquid recovery storage tank through a waste liquid discharge pump (P106A/B).

2. The chemical pretreatment process for the waste FOG according to claim 1, wherein the crude product separation and evaporation system in step S3 comprises a 1# evaporator (E103) and a 1# gas-liquid separator (V103) disposed in series, and
the catalyst recovery evaporation system in steps S1 and S4 comprises a 2# evaporator (E104) and a 2# gas-liquid separator (V104) disposed in series.

3. The chemical pretreatment process for the waste FOG according to any preceding claim, wherein the ionic liquid catalyst in step S1 is a Bronsted acid protic ionic liquid prepared from a linear or heterocyclic tertiary amine compound and sulfuric acid, benzenesulfonic acid, or p-toluenesulfonic acid by one-step neutralization reaction.

4. The chemical pretreatment process for the waste FOG according to any preceding claim, wherein in step S1, a mass ratio of reaction raw materials to the catalyst is in a range of waste FOG: methanol: catalyst of 1:(0.4 to 1.6):(0.05 to 0.50), the 1# esterification reactor (R101) and the 2# esterification reactor (R102) have an operating temperature of 60°C to 90°C, a reaction pressure of 0.1 MPa to 0.5 MPa, and a material residence time in both esterification reactors of 3 h to 5 h.

5. The chemical pretreatment process for the waste FOG according to any preceding claim, wherein the chromatograph device (V102) in step S2 has an operating temperature of 40°C to 80°C, and an operating pressure of 0.1 MPa to 0.5 MPa.

6. The chemical pretreatment process for the waste FOG according to any preceding claim, wherein in step S3, the crude product separation and evaporation system has an operating temperature of 105°C to 165°C, an operating pressure of 0.1 MPa to 0.5 Mpa; a low-pressure steam of a heating medium in the 1# evaporator (E103) has a temperature of 140°C to 180°C, and a pressure of 0.3 MPa to 0.8 Mpa; and a heated steam condensate is supplied to a previous esterification reaction section for providing heat; and
in step S4, the catalyst recovery evaporation system has an operating temperature of 100°C to 160°C, and an operating pressure of 0.1 MPa to 0.5 MPa; a low-pressure steam of a heating medium in the 2# evaporator (E104) has a temperature of 140°C to 180°C, and a pressure of 0.3 MPa to 0.8 MPa; and a heated steam condensate is supplied to the previous esterification reaction section for providing heat.

7. The chemical pretreatment process for the waste FOG according to any preceding claim, wherein in step S5, the methanol recovery tower (T101) has an operating pressure of 0.1 MPa to 0.5 MPa, an operating temperature at the tower top of 40°C to 80°C, an operating temperature at the tower bottom of 80°C to 120°C, and an operating reflux ratio of 1.0 to 5.0; a low-pressure steam of a heating medium at the tower bottom has a temperature of 100°C to 140°C, and a pressure of 0.1 MPa to 0.3 MPa; and a heated steam condensate is supplied to the previous esterification reaction section for providing heat.

8. The chemical pretreatment process for the waste FOG according to any preceding claim, wherein the both esterification reactors in step S1 are stirred tank reactors internally provided with an inner coil heater and an external circulation heat exchanger (E101/E102) for heating, and a heating medium is a steam condensate from a subsequent working section; when the reaction is out of control and overtemperature occurs, a recycled water is added to reduce a temperature of the reaction through the external circulation heat exchanger (E101/E102), and a reaction pressure is controlled by supplementing a low-pressure nitrogen.

9. The chemical pretreatment process for the waste FOG according to any preceding claim, wherein in order to prevent clogging from affecting normal operation, the filter connecting with the chromatograph device (V102) in step S2 is provided with two filter devices disposed in parallel, namely a first filter (F101A) and a second filter (F101B), one is put into normal use and the other is regularly back-flushed.

## Patentansprüche

1. Verfahren zur chemischen Vorbehandlung von Fett-, Öl- und/oder Schmalz(FOG)-Abfällen, umfassend:
S1, Mischen eines frischen Methanols aus einer Hauptleitung von einer Systemgrenze und einer rückgeführten ionischen Flüssigkeit aus einem Katalysatorrückgewinnungsverdampfungssystem, um ein Gemisch zu erlangen, und dann Einführen des Gemischs in einen Katalysatorvorbereitungstank (V101); Hinzufügen eines frischen ionischen Flüssigkeitskatalysators zu dem Katalysatorvorbereitungstank (V101) und dann Rühren und Auflösen, um eine Katalysatorlösung zu erhalten, und Abführen der Katalysatorlösung durch eine Katalysatorförderpumpe (P101A/B); Mischen eines rückgeführten Methanols aus einem Methanolrückgewinnungsturm (T101) mit den FOG-Abfällen aus der Hauptrohrleitung von der Systemgrenze, gefolgt von Mischen mit der Katalysatorlösung und dann Fördern zu einem statischen Mischer (X101) durch eine Leitung und vollständiges Durchführen des Mischens, um ein gemischtes System zu erlangen; Einführen des gemischten Systems in einen 1#-Veresterungsreaktor (R101) und Unterziehen von Methanol und der FOG-Abfälle einer Veresterungsreaktion unter Einwirkung eines ionischen Flüssigkeitskatalysators bei einer voreingestellten Reaktionstemperatur und einem voreingestellten Reaktionsdruck, um einen Fettsäuremethylester und Wasser zu erzeugen; und Einführen von nicht umgesetztem Methanol, nicht umgesetzten FOG-Abfällen und einem im 1#-Veresterungsreaktor (R101) erzeugten Rohprodukt in einen 2#-Veresterungsreaktor (R102) und Fortsetzen der Veresterungsreaktion, um den Fettsäuremethylester und das Wasser weiter zu erzeugen;
S2, Einführen eines Rohprodukts, das nach der Veresterungsreaktion in dem 2#-Veresterungsreaktor (R102) erlangt wurde, in einen Filter (F101A/B) durch eine externe 2#-Umwälzpumpe (P103A/B); Entfernen einer festen Verunreinigung, die sich in dem Filter (F101A/B) niedergeschlagen hat, und Sammeln der festen Verunreinigung in einem Feststoffabfallbehandlungs- und -speichertank; Einführen eines filtrierten Rohprodukts in eine Chromatographievorrichtung (V102) und Durchführen einer Öl-Wasser-Zweiphasentrennung, um eine Ölphase und eine wässrige Phase zu erlangen, wobei die Ölphase hauptsächlich einen Fettsäuremethylester, Methanol, Wasser und einige nicht umgesetzte FOG-Abfälle umfasst und die wässrige Phase hauptsächlich Methanol, eine ionische Flüssigkeit und durch Reaktionen erzeugtes Wasser umfasst;
S3, Einführen des Ölphasenprodukts, das durch die Öl-Wasser-Trennung in der Chromatographievorrichtung (V102) erlangt wurde, in ein Rohprodukttrennungs- und - verdampfungssystem und Durchführen einer Flash-Verdampfung, um Methanol und ein Rohprodukt durch Siedepunktunterschiede zwischen Wasser, Methanol und dem Fettsäuremethylester abzutrennen; Einführen eines durch das Rohprodukttrennungs- und - verdampfungssystem erlangten Gasphasenprodukts, d. h. Methanol und Wasser, in ein nachfolgendes Methanolrückgewinnungssystem und Einführen des Rohprodukts, das den Fettsäuremethylester und teilweise nicht umgesetzte FOG-Abfälle enthält, in einen Produktspeichertank durch eine Rohproduktförderpumpe (P104A/B);
S4, Einführen des wässrigen Phasenprodukts, das durch die Öl-Wasser-Trennung in der Chromatographievorrichtung (V102) erlangt wurde, in das Katalysatorrückgewinnungsverdampfungssystem und Durchführen einer Flash-Verdampfung, um die ionische Flüssigkeit, Methanol und Wasser durch Siedepunktunterschiede zwischen der ionischen Flüssigkeit, Methanol und Wasser abzutrennen; Einführen eines durch das Katalysatorrückgewinnungsverdampfungssystem erlangten Gasphasenprodukts, d. h. Methanol und Wasser, in das nachfolgende Methanolrückgewinnungssystem, Zurückleiten des größten Teils des rückgewonnenen ionischen Flüssigkeitskatalysators in den Katalysatorvorbereitungstank (V101) und Einführen einer deaktivierten ionischen Flüssigkeit in einen Abfallkatalysatorrückgewinnungsspeichertank; und
S5, Kühlen des Methanols und des Wassers aus dem Rohprodukttrennungs- und - verdampfungssystem und dem Katalysatorrückgewinnungsverdampfungssystem zu einer Flüssigkeit durch einen Methanolkondensator (E105) und Einführen der Flüssigkeit in einen Methanolspeichertank (V105); Unterdrucksetzen der Flüssigkeit durch eine Methanolspeisepumpe (P105A/B) und dann Einführen der Flüssigkeit in den Methanolrückgewinnungsturm (T101) und Durchführen einer Destillationstrennung, um hochreines Gasphasenmethanol an einem Turmkopf und Abwasser an einem Turmboden zu erlangen; Abkühlen des hochreinen Gasphasenmethanols durch einen Turmkopfkühler (E107), um ein Methanolprodukt zu erlangen, Rückströmenlassen eines Teils des Methanolprodukts und Fördern eines Teils des Methanolprodukts zurück zum 1#-Reaktor (R101) durch eine Rückstrompumpe (P107A/B); und Fördern des am Turmboden erlangten Abwassers zu einem Flüssigabfallrückgewinnungsspeichertank durch eine Flüssigabfallaustragspumpe (P106A/B).

2. Verfahren zur chemischen Vorbehandlung für FOG-Abfälle nach Anspruch 1, wobei das Rohprodukttrennungs- und -verdampfungssystem in Schritt S3 einen 1#-Verdampfer (E103) und einen 1#-Gas-Flüssigkeitstrenner (V103) umfasst, die in Reihe angeordnet sind, und
das Katalysatorrückgewinnungsverdampfungssystem in den Schritten S1 und S4 einen 2#-Verdampfer (E104) und einen 2#-Gas-Flüssigkeitstrenner (V104) umfasst, die in Reihe angeordnet sind.

3. Verfahren zur chemischen Vorbehandlung für FOG-Abfälle nach einem vorhergehenden Anspruch, wobei der ionische Flüssigkeitskatalysator in Schritt S1 eine protische ionische Brönsted-Säureflüssigkeit ist, die aus einer linearen oder heterocyclischen tertiären Aminverbindung und Schwefelsäure, Benzolsulfonsäure oder p-Toluolsulfonsäure durch eine einstufige Neutralisationsreaktion hergestellt wird.

4. Verfahren zur chemischen Vorbehandlung für FOG-Abfälle nach einem vorhergehenden Anspruch, wobei in Schritt S1 ein Massenverhältnis von Reaktionsrohmaterialien zu dem Katalysator in einem Bereich von FOG-Abfälle : Methanol : Katalysator von 1: (0,4 bis 1,6):(0,05 bis 0,50) ist, der 1#-Veresterungsreaktor (R101) und der 2#-Veresterungsreaktor (R102) eine Betriebstemperatur von 60 °C bis 90 °C, einen Reaktionsdruck von 0,1 MPa bis 0,5 MPa und eine Materialverweilzeit in beiden Veresterungsreaktoren von 3 h bis 5 h aufweisen.

5. Verfahren zur chemischen Vorbehandlung für FOG-Abfälle nach einem vorhergehenden Anspruch, wobei die Chromatographievorrichtung (V102) in Schritt S2 eine Betriebstemperatur von 40 °C bis 80 °C und einen Betriebsdruck von 0,1 MPa bis 0,5 MPa aufweist.

6. Verfahren zur chemischen Vorbehandlung für FOG-Abfälle nach einem vorhergehenden Anspruch, wobei in Schritt S3 das Rohprodukttrennungs- und -verdampfungssystem eine Betriebstemperatur von 105 °C bis 165 °C, einen Betriebsdruck von 0,1 MPa bis 0,5 MPa aufweist; ein Niederdruckdampf eines Heizmediums in dem 1#-Verdampfer (E103) eine Temperatur von 140 °C bis 180 °C und einen Druck von 0,3 MPa bis 0,8 MPa aufweist; und ein erhitztes Dampfkondensat einem vorherigen Veresterungsreaktionsabschnitt zugeführt wird, um Wärme bereitzustellen; und
in Schritt S4 das Katalysatorrückgewinnungsverdampfungssystem eine Betriebstemperatur von 100 °C bis 160 °C und einen Betriebsdruck von 0,1 MPa bis 0,5 MPa aufweist; ein Niederdruckdampf eines Heizmediums in dem 2#-Verdampfer (E104) eine Temperatur von 140 °C bis 180 °C und einen Druck von 0,3 MPa bis 0,8 MPa aufweist; und ein erhitztes Dampfkondensat dem vorherigen Veresterungsreaktionsabschnitt zugeführt wird, um Wärme bereitzustellen.

7. Verfahren zur chemischen Vorbehandlung für FOG-Abfälle nach einem vorhergehenden Anspruch, wobei in Schritt S5 der Methanolrückgewinnungsturm (T101) einen Betriebsdruck von 0,1 MPa bis 0,5 MPa, eine Betriebstemperatur am Turmkopf von 40 °C bis 80 °C, eine Betriebstemperatur am Turmboden von 80 °C bis 120 °C und ein Betriebsrückstromverhältnis von 1,0 bis 5,0 aufweist; ein Niederdruckdampf eines Heizmediums an dem Turmboden eine Temperatur von 100 °C bis 140 °C und einen Druck von 0,1 MPa bis 0,3 MPa aufweist; und ein erhitztes Dampfkondensat dem vorherigen Veresterungsreaktionsabschnitt zugeführt wird, um Wärme bereitzustellen.

8. Verfahren zur chemischen Vorbehandlung für FOG-Abfälle nach einem vorhergehenden Anspruch, wobei die beiden Veresterungsreaktoren in Schritt S1 Rührtankreaktoren sind, die im Inneren mit einer internen Spulenheizung und einem externen Zirkulationswärmetauscher (E101/E102) zum Erwärmen versehen sind, und ein Heizmedium ein Dampfkondensat aus einem nachfolgenden Arbeitsabschnitt ist; wobei, wenn die Reaktion außer Kontrolle geraten ist und eine Übertemperatur auftritt, ein rückgeführtes Wasser hinzugefügt wird, um eine Temperatur der Reaktion durch den externen Zirkulationswärmetauscher (E101/E102) zu reduzieren, und ein Reaktionsdruck durch Ergänzen eines Niederdruckstickstoffs gesteuert wird.

9. Verfahren zur chemischen Vorbehandlung für FOG-Abfälle nach einem vorhergehenden Anspruch, wobei, um zu verhindern, dass ein Verstopfen den normalen Betrieb beeinträchtigt, der Filter, der mit der Chromatographievorrichtung (V102) in Schritt S2 verbunden ist, mit zwei Filtervorrichtungen versehen ist, die parallel angeordnet sind, nämlich einem ersten Filter (F101A) und einem zweiten Filter (F101B), wobei einer normal verwendet wird und der andere regelmäßig rückgespült wird.

## Revendications

1. Processus de prétraitement chimique pour des graisses, huiles et matières grasses (FOG) usées comprenant :
S1, le mélange d'un méthanol frais provenant d'une conduite principale depuis une limite et d'un liquide ionique recyclé provenant d'un système d'évaporation de récupération de catalyseur pour obtenir un mélange, puis l'introduction du mélange dans une cuve de préparation de catalyseur (V101) ; l'ajout d'un catalyseur liquide ionique frais dans la cuve de préparation de catalyseur (V101), puis l'agitation et la dissolution pour obtenir une solution de catalyseur, et l'évacuation de la solution de catalyseur au moyen d'une pompe de transport de catalyseur (P101A/B) ; le mélange d'un méthanol recyclé provenant d'une colonne de récupération de méthanol (T101) avec les FOG usées provenant de la conduite principale depuis la limite, suivi du mélange avec la solution de catalyseur, puis de l'acheminement vers un mélangeur statique (X101) à travers une conduite et de la réalisation d'un mélange complet pour obtenir un système mélangé ; l'introduction du système mélangé dans un réacteur d'estérification n°1 (R101) et la soumission du méthanol et des FOG usées à une réaction d'estérification sous l'action d'un catalyseur liquide ionique à une température et à une pression de réaction prédéfinies pour générer un ester méthylique d'acide gras et de l'eau ; et l'introduction de méthanol n'ayant pas réagi, de FOG usées n'ayant pas réagi et d'un produit brut généré dans le réacteur d'estérification n°1 (R101) dans un réacteur d'estérification n°2 (R102) et la poursuite de la réaction d'estérification pour générer davantage d'ester méthylique d'acide gras et d'eau ;
S2, l'introduction d'un produit brut obtenu après la réaction d'estérification dans le réacteur d'estérification n°2 (R102) dans un filtre (F101A/B) au moyen d'une pompe de circulation externe n°2 (P103A/B) ; l'élimination d'une impureté solide précipitée dans le filtre (F101A/B), et la collecte de l'impureté solide dans une cuve de traitement et de stockage de déchets solides ; l'introduction d'un produit brut filtré dans un dispositif de chromatographie (V102) et la réalisation de la séparation en deux phases huile-eau pour obtenir une phase huileuse et une phase aqueuse, dans lequel la phase huileuse comprend principalement un ester méthylique d'acide gras, du méthanol, de l'eau et certains FOG usées n'ayant pas réagi, et la phase aqueuse comprend principalement du méthanol, un liquide ionique et de l'eau générée par les réactions ;
S3, l'introduction du produit de phase huileuse obtenu par la séparation huile-eau dans le dispositif de chromatographie (V102) dans un système de séparation et d'évaporation de produit brut, et la réalisation d'une évaporation éclair pour séparer le méthanol et un produit brut par différences de points d'ébullition entre l'eau, le méthanol et l'ester méthylique d'acide gras ; l'introduction d'un produit de phase gazeuse obtenu par le système de séparation et d'évaporation de produit brut, c'est-à-dire le méthanol et l'eau dans un système de récupération de méthanol ultérieur, et l'introduction du produit brut contenant l'ester méthylique d'acide gras et des FOG usées n'ayant partiellement pas réagi dans une cuve de stockage de produit au moyen d'une pompe de transport de produit brut (P104A/B) ;
S4, l'introduction du produit de phase aqueuse obtenu par la séparation huile-eau dans le dispositif de chromatographie (V102) dans le système d'évaporation de récupération de catalyseur, et la réalisation d'une évaporation éclair pour séparer le liquide ionique, le méthanol et l'eau par différences de points d'ébullition entre le liquide ionique, le méthanol et l'eau ; l'introduction d'un produit de phase gazeuse obtenu par le système d'évaporation de récupération de catalyseur, c'est-à-dire le méthanol et l'eau dans le système de récupération de méthanol suivant, le renvoi de la majeure partie du catalyseur liquide ionique récupéré dans la cuve de préparation de catalyseur (V101), et l'introduction d'un liquide ionique désactivé dans une cuve de stockage de récupération de catalyseur usé ; et
S5, le refroidissement du méthanol et de l'eau provenant du système de séparation et d'évaporation de produit brut et du système d'évaporation de récupération de catalyseur dans un liquide au moyen d'un condenseur de méthanol (E105), et l'introduction du liquide dans une cuve de stockage de méthanol (V105) ; la mise sous pression du liquide par une pompe d'alimentation en méthanol (P105A/B), puis l'introduction du liquide dans la colonne de récupération de méthanol (T101) et la réalisation d'une séparation par distillation pour obtenir du méthanol en phase gazeuse de haute pureté en haut de la colonne et des eaux usées en bas de la colonne ; le refroidissement du méthanol en phase gazeuse de haute pureté par un refroidisseur en haut de la colonne (E107) pour obtenir un produit méthanol, le reflux d'une partie du produit méthanol et l'acheminement d'une partie du produit méthanol vers le réacteur n°1 (R101) par une pompe de reflux (P107A/B) ; et l'acheminement des eaux usées obtenues en bas de la colonne vers une cuve de stockage de récupération de liquide usé au moyen d'une pompe de décharge de liquide usé (P106A/B).

2. Processus de prétraitement chimique pour les FOG usées selon la revendication 1, dans lequel le système de séparation et d'évaporation de produit brut à l'étape S3 comprend un évaporateur n°1 (E103) et un séparateur gaz-liquide n°1 (V103) disposés en série, et
le système d'évaporation de récupération de catalyseur aux étapes S1 et S4 comprend un évaporateur n°2 (E104) et un séparateur gaz-liquide n°2 (V104) disposés en série.

3. Processus de prétraitement chimique pour les FOG usées selon une quelconque revendication précédente, dans lequel le catalyseur liquide ionique à l'étape S1 est un liquide ionique protique acide de Bronsted préparé à partir d'un composé amine tertiaire linéaire ou hétérocyclique et d'acide sulfurique, d'acide benzènesulfonique ou d'acide p-toluènesulfonique par une réaction de neutralisation en une seule étape.

4. Processus de prétraitement chimique pour les FOG usées selon une quelconque revendication précédente, dans lequel à l'étape S1, un rapport massique des matières premières de réaction au catalyseur est compris dans une plage de FOG usées:méthanol:catalyseur de 1:(0,4 à 1,6):(0,05 à 0,50), le réacteur d'estérification n°1 (R101) et le réacteur d'estérification n°2 (R102) présentent une température de fonctionnement de 60 °C à 90 °C, une pression de réaction de 0,1 MPa à 0,5 MPa et un temps de séjour des matières dans les deux réacteurs d'estérification de 3 h à 5 h.

5. Processus de prétraitement chimique pour les FOG usées selon une quelconque revendication précédente, dans lequel le dispositif de chromatographie (V102) à l'étape S2 présente une température de fonctionnement de 40 °C à 80 °C, et une pression de fonctionnement de 0,1 MPa à 0,5 MPa.

6. Processus de prétraitement chimique pour les FOG usées selon une quelconque revendication précédente, dans lequel à l'étape S3, le système de séparation et d'évaporation de produit brut présente une température de fonctionnement de 105 °C à 165 °C, une pression de fonctionnement de 0,1 MPa à 0,5 MPa ; une vapeur basse pression d'un milieu chauffant dans l'évaporateur n°1 (E103) présente une température de 140 °C à 180 °C, et une pression de 0,3 MPa à 0,8 MPa ; et un condensat de vapeur chauffé est fourni à une section de réaction d'estérification précédente pour fournir de la chaleur ; et
à l'étape S4, le système d'évaporation de récupération de catalyseur présente une température de fonctionnement de 100 °C à 160 °C, et une pression de fonctionnement de 0,1 MPa à 0,5 MPa ; une vapeur basse pression d'un milieu de chauffage dans l'évaporateur n°2 (E104) présente une température de 140 °C à 180 °C, et une pression de 0,3 MPa à 0,8 MPa ; et un condensat de vapeur chauffé est fourni à la section de réaction d'estérification précédente pour fournir de la chaleur.

7. Processus de prétraitement chimique pour les FOG usées selon une quelconque revendication précédente, dans lequel à l'étape S5, la colonne de récupération de méthanol (T101) présente une pression de fonctionnement de 0,1 MPa à 0,5 MPa, une température de fonctionnement en haut de la colonne de 40 °C à 80 °C, une température de fonctionnement en bas de la colonne de 80 °C à 120 °C, et un rapport de reflux de fonctionnement de 1,0 à 5,0 ; une vapeur basse pression d'un milieu de chauffage au fond de la colonne présente une température de 100 °C à 140 °C, et une pression de 0,1 MPa à 0,3 MPa ; et un condensat de vapeur chauffé est fourni à la section de réaction d'estérification précédente pour fournir de la chaleur.

8. Processus de prétraitement chimique pour les FOG usées selon une quelconque revendication précédente, dans lequel les deux réacteurs d'estérification à l'étape S1 sont des réacteurs à cuve agitée équipés en interne d'un serpentin chauffant interne et d'un échangeur de chaleur à circulation externe (E101/E102) pour le chauffage, et un milieu de chauffage est un condensat de vapeur provenant d'une section de travail ultérieure ; lorsque la réaction est hors de contrôle et qu'une surchauffe se produit, de l'eau recyclée est ajoutée pour réduire une température de la réaction à travers l'échangeur de chaleur à circulation externe (E101/E102), et une pression de réaction est régulée par apport d'azote basse pression.

9. Processus de prétraitement chimique pour les FOG usées selon une quelconque revendication précédente, dans lequel afin d'empêcher le colmatage d'affecter le fonctionnement normal, le filtre relié au dispositif de chromatographie (V102) à l'étape S2 est équipé de deux dispositifs filtrants disposés en parallèle, à savoir un premier filtre (F101A) et un second filtre (F101B), l'un est utilisé normalement et l'autre est régulièrement rincé à contre-courant.
